# EUROPEAN PATENT APPLICATION

(11) **EP 2 631 115 A1**
(43) Date of publication of application: **28.08.2013**
(21) Application number: 12156663.2
(22) Date of filing: 23.02.2012
(51) Int. Cl.: B60N 2/48, B60N 2/64, B60N 3/00, B60R 7/04

(54) **Back rest with back support**

(71) Applicant: BE-GE JANY A/S, 7741 Frøstrup (DK)
(72) Inventor: Jepsen, Dennis Stjernholm, DK-9690 Fjerritslev (DK); Kanstrup, Kristian, DK-7752 Snedsted (DK)
(74) Representative: Plougmann & Vingtoft A/S

(57) **Abstract**

Back rest (1) comprising two standing side bars (3) and at least one cross bar (4) forming a frame (5) with a void (2) suitable for accommodating a load is described. The back rest (1) is further provided with mounting means (6) for mounting the back rest in a sitting arrangement. The back rest further comprises a flexible cover (7) connected to the frame and a holding arrangement (8) for positioning the cover (7) over the void.

## Description

### FIELD OF THE INVENTION

The present invention relates to a backrest provided with a void in the back supporting surface. More specifically, it relates to a device for covering and making accessible the void of a back rest.

### BACKGROUND OF THE INVENTION

In some professions, there is a need for persons to be transported in a vehicle while having some sort of back load, e.g. smoke divers with oxygen bottles or military personnel with different back packs. Due to the circumstances under which smoke divers are called out, they are usually transported under high speed with a corresponding risk of injury if there is an accident. However, it has been a challenge to provide a secure fastening system for these persons.

It is known to provide backrests with a void tailored to accommodate oxygen bottles, back packs or the like. This enables the person sitting on a seat with a recessed back rest to use normal safety belts or other dedicated safety equipment. However, a back rest where a substantial part of the back supporting surface is removed to accommodate equipment, will provide little support for a person not having any load on the back. It is therefore a need for a device that can cover the void of a recessed backrest when a normal seat is desired, where the device can be easily removed when the void is requested.

### OBJECT OF THE INVENTION

It is therefore an object of the present invention to provide a device for opening and covering a void provided in a back rest.

It is also an object of the invention to present a device that has no essential loose or free parts that can be lost, and that provides sufficient support to the back of a user resting towards the back rest according to the invention.

Furthermore, it is an object of the present invention to present an alternative to prior art.

### SUMMARY OF THE INVENTION

Thus, in a back rest comprising two standing side bars and at least one cross bar forming a frame with a void suitable for accommodating a load, where the back rest is further provided with mounting means for mounting the back rest in a sitting arrangement, the above described object and several other objects are intended to be obtained in a first aspect of the invention by providing the back rest with a flexible cover that is connected to the frame and further providing the back rest and cover with holding means for positioning the cover over the void.

The cover according to the invention is connected to a point or section on one of the side bars or a cross bar of the frame. The cover can be connected to the upper cross bar of the frame or to a lower cross bar, either being part of the back rest or a seat connected to the back rest.

The holding arrangement can be an arrangement of zippers on a suitable part of the free sides of the cover with corresponding zippers on the frame. Zipper locks are provided to lock and open the zippers in a commonly known manner. The zippers can be arranged along the side bars of the back rest and along corresponding borders of the cover. It is advantageous if the locks are connected by a handle. The handle can for example be made of a strap, band or rope.

The holding arrangement can also be an arrangement of magnets provided in or on the frame of the back rest and in or on the cover, arranged in such a way that when the cover covers the void of the back rest, the magnets of the frame and cover are connected. However, the holding arrangement can also be arrangements of hooks and loops or buttons and buttonholes.

In one aspect of the invention, the cover is provided with reinforcing bars. The reinforcing bars can be lying or standing, depending on the connection point or border between the cover and the frame. The cover can also be padded. It is then possible for the reinforcing bars to be arranged in the padding of the cover.

The cover can be made in a textile, a synthetic fabric or a fibre-reinforced textile or synthetic fabric or even leather.

### BRIEF DESCRIPTION OF THE FIGURES

The back rest according to the invention will now be described in more detail with regard to the accompanying figures. The figures show one way of implementing the present invention and is not to be construed as being limiting to other possible embodiments falling within the scope of the attached claim set.
Figure 1 shows an embodiment of a back rest with void and without back cover.
Figure 2 shows a back rest with an embodiment of a cover according to the invention.
Figure 3 shows the cover in figure 2 partly covering the void of the back rest
Figure 4 shows a perspective view where the cover in figure 2 is folded away from the void of the back rest.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

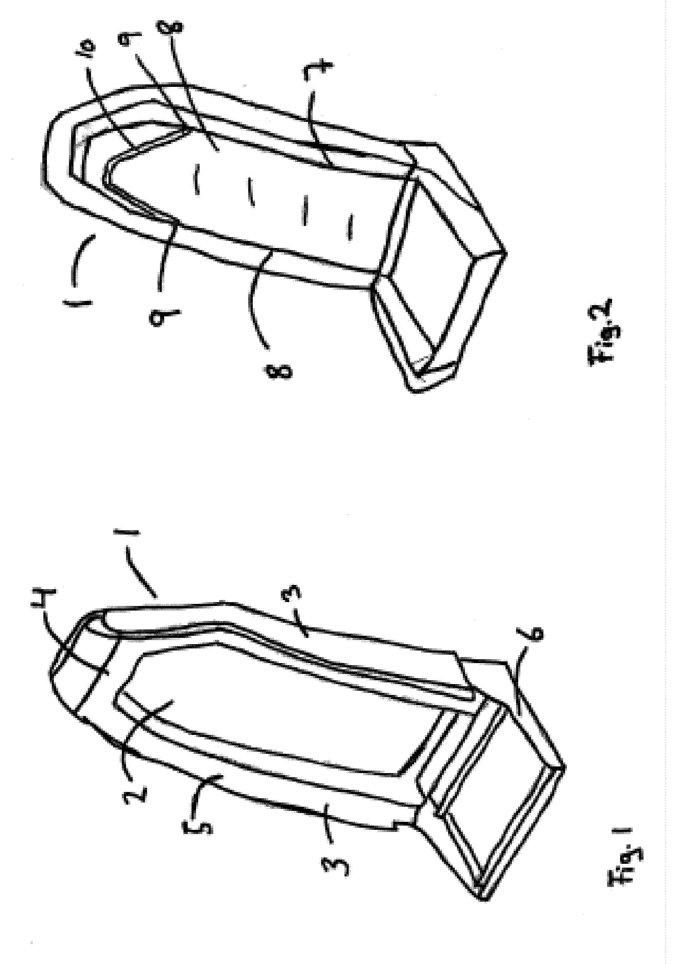

Figure 1 shows an embodiment of a back rest 1 with void 2. Side bars 3 and cross bar 4 form a back supporting part of the back rest. The void 2 makes it possible for a user resting towards the back seat to carry a load such as a back pack, oxygen bottles or the like in a comfortable manner. The back rest 1 is further provided with a mounting arrangement 6 for mounting the back rest in a sitting arrangement (not shown) or to a chassis of a vehicle. However, the back rest can be mounted in any suitable manner without departing from the scope of the invention. Alternatively, the back rest 1 may be part of an integrally formed seat comprising a bottom seat and the back rest.

Figure 2 shows a back rest 1 provided with an embodiment of a cover 7 according to the invention. The cover 7 is connected to the cross bar 4 of the back rest 1. A holding arrangement is provided, to hold the cover 7 on the void 2. In the shown embodiment, the holding arrangement is zipper arrangements 8 along the side bars 3 corresponding to zipper arrangements 8 on the cover 7. Zipper locks 9 are provided on each zipper arrangement to open and lock the zippers 8, as generally known. The locks 9 can be provided with a handle 10 connecting them in such a way that the zippers on each side can be opened and locked simultaneously.

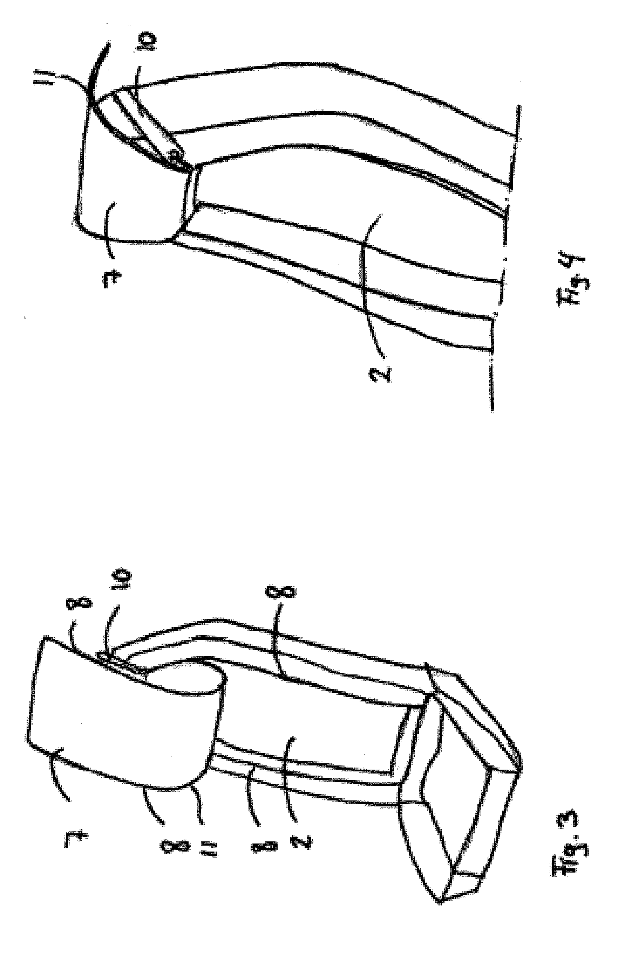

Figure 3 shows the cover 7 according to the invention partly covering the void 2 of the back rest 1. When the cover 7 is being removed from or rearranged onto the void 2, the loose part of the cover may be folded over the back rest 1 or to the side. Figure 4 shows a perspective view where the cover 7 is folded away from the void 2 of the back rest 1.

As an example the frame 5 such as the side bars 3 and/or the cross bar 4 may be made from tubes which have been bent into a suitable shape. A simple sock provided with a zipper arrangement 8 may be pulled over the tubes, or the tubes may be provided with cushioning having the zipper arrangement 8.

The holding arrangement 8 may be configured to satisfy various standards which define rules ensuring that a seated person does not fall through the backrest, such as the ECE-R17 backrest test.

With the term "void" is meant a free space formed within the frame of a back rest. Such a void can be a through-going hole in the frame shaped to enable back pack such as oxygen bottles to pass through the void. Alternatively, the void can be a recess formed in a back rest, so that there is some sort of back panel or cushion behind the void in addition to the frame encompassing the void. It should also be noted that the "void" or the back rest can be provided with further means for accommodating a load, such as fixing means for holding oxygen bottles or the like, straps, bands, belts or other for securing the load of a passenger or the passenger himself.

The cover should be made of a flexible and durable material, for example Kevlar, cotton, nylon, leather. If desirable, it can be reinforced by one or more inner reinforcing bars.

As the cover is connected to the back rest, there is no risk of loosening the cover. With an arrangement according to the shown embodiment, the cover can easily be secured on the void of the back rest, enabling it to form a sufficient support for any user. When there is a need for a void in the back rest to accommodate a back load, the cover can easily be opened and folded over the upper cross bar of the back rest or otherwise folded away, thereby being kept out of the way of the passengers.

It should be noted that even if the cover in the shown embodiment is connected to an upper cross bar of the back rest, it can also be connected to one of the side bars. This can be useful for example if there is no free space behind the back rest to store the free part of the cover. When the cover is lifted off the void of the back rest, it can then be folded over one side of the back rest. The cover can also be connected to a lower cross bar of a back rest or sitting arrangement comprising a back rest according to the invention, in such a way that when the cover is removed from the void, it can be laid over the seat of the sitting arrangement, so that the person resting towards the back rest will sit on the cover. The cover can even be attached to the a seat part being connected to a back rest according to the invention, as long as the cover is able to duly and adequately cover the void of the back rest when desired.

It is advantageous if the cover is made in a flexible material, as this simplifies handling of the cover. A flexible cover can easily be folded over the side or head rest of the back rest when the void is made accessible and correspondingly folded over the void when a full back support for a person not carrying a load is demanded. A flexible cover can also be rolled and stored on the side or top of the back rest, if there is little room for leaving the cover behind or to the side of the back rest according to the invention.

The cover is connected to a point or section on one of the side bars or a cross bar of the frame. As the cover is connected to the back rest at any time, the risk of loosening the cover is reduced to a minimum.

The holding arrangement can be an arrangement of zippers on a suitable part of the free sides of the cover with corresponding zippers on the frame, zipper locks are provided to lock the zippers. The zippers can be arranged along the side bars of the back rest and along corresponding borders of the cover. It is advantageous if the locks are connected by a handle. A pair of zippers where the zipper locks are connected by a handle provide a quick and easy means for opening and locking the cover over the void.

However, the holding arrangement can be made in other ways, as long as the cover is adequately covering the void and providing support to the back of the person resting towards the back rest. As an example, an arrangement of magnets can be provided in or on the frame of the back rest and in or on the cover, arranged in such a way that when the cover covers the void of the back rest, the magnets of the frame and cover are connected. Such an arrangement will provide a quick means for making the void accessible and for covering the void, when requested. The holding arrangement can also be an arrangement of hooks and loops, buttons and buttonholes or other holding means providing the requested and necessary hold between the cover and the back rest.

Furthermore, the cover can be provided with one or more reinforcing bars, to provide a further support for the back of the user, when the void is covered. The reinforcing bars can be lying or standing, depending on the connection point or border between the cover and the frame. Such reinforcing bars can be rigid or flexible. However, from a comfort aspect, it is likely that the bars should be flexible to some extent. The bars can also be ergonomically adapted to the overall shape of the back rest, as long as it is still possible to handle the cover without being too much hampered by built-in stiffening elements such as reinforcing bars. The cover can also be padded. It is then possible for the reinforcing bars to be arranged in the padding of the cover.

The cover can be made in a textile, a synthetic fabric, a fibre-reinforced textile or synthetic fabric or leather.

## Claims

1. Back rest (1) comprising two standing side bars (3) and at least one cross bar (4) forming a frame (5) with a void (2) suitable for accommodating a load, the back rest (1) is further provided with mounting means (5) for mounting the back rest in a sitting arrangement,
**characterised in that** the back rest further comprises a flexible cover (7) connected to the frame and a holding arrangement (8) for positioning the cover (7) over the void.

2. Back rest according to claim 1,
**characterised in that** the cover (7) is connected to a point or section on one of the side bars (3).

3. Back rest according to claim 1,
**characterised in that** the cover (7) is connected to a point or section on a cross bar (4) of the frame.

4. Back rest according to claim 1,
**characterised in that** the holding arrangement (8) is an arrangement of zippers on the free sides of the cover with corresponding zippers on the frame (5), the zipper locks (9) are provided to lock the zippers.

5. Back rest according to claim 4,
**characterised in that** zippers are arranged along the side bars (3) of the back rest and along corresponding borders (11) of the cover.

6. Back rest according to claim 4 or 5,
**characterised in that** the locks (9) are connected by a handle (10).

7. Back rest according to claim 1,
**characterised in that** the holding arrangement (8) is an arrangement of magnets provided in the frame (5) and the cover (7), arranged in such a way that when the cover (7) covers the void (2) of the back rest (1), the magnets of the frame and cover are connected.

8. Back rest according to claim 1,
**characterised in that** the holding arrangement (8) is an arrangement of hooks and loops or buttons and buttonholes.

9. Back rest according to claim 1,
**characterised in that** the cover (7) is provided with reinforcing bars.

10. Back rest according to claim 9,
**characterised in that** the reinforcing bars are lying.

11. Back rest according to claim 9,
**characterised in that** the reinforcing bars are standing.

12. Back rest according to claim 1,
**characterised in that** the cover (7) is padded.

13. Back rest according to any of the claims 9-12,
**characterised in that** the reinforcing bars are arranged in the padding of the cover (7).

14. Back rest according to claim 1,
**characterised in that** the cover (7) is made in a textile, a synthetic fabric, a fibre-reinforced textile or synthetic fabric or leather.
